# EUROPEAN PATENT APPLICATION

(11) **EP 4 712 688 A1**
(43) Date of publication of application: **18.03.2026**
(21) Application number: 24382987.6
(22) Date of filing: 16.09.2024
(51) Int. Cl.: H05B 1/02, G05D 23/19

(54) **POWER REGULATION METHOD FOR A HEATING ELEMENT AND CONTROL SYSTEM TO IMPLEMENT SAID METHOD**

(71) Applicant: Dengra Vera, Antonio, 30389 Los Belones Murcia (ES)
(72) Inventor: Dengra Vera, Antonio, 30389 Los Belones (ES); Dengra Asensio, José Guillermo, 30007 Murcia (ES); Vadillo Pastor, Juan Ramón, 46021 Valencia (ES)
(74) Representative: Espiell Gomez, Ignacio

(57) **Abstract**

The invention relates to a power regulation method for a heating element and control system for implementing said method, the method comprising the application of the cycle stealing technique to adjust the power supplied to the resistive load at multiple levels, such that the modulation period is enlarged, reducing the frequency of the current signal that modulates the carrier, in order to reduce the generation of harmonics. The control system comprises a controller (2) connected to a power regulator (3) acting on the heating element (1), such that said controller (2) adjusts the power supplied by the regulator (3) to the resistive load of the heating element (1) by the cycle stealing technique in fine steps.

## Description

### OBJECT OF THE INVENTION

The invention, as expressed in the title of this specification, relates to a power regulation method for a Joule heating element and to a control system for implementing said method, providing advantages and features that are described in detail below.

The object of the present invention relates to a power regulation method for a Joule heating system that includes a resistive load that, instead of being an all/nothing system, is based on the application of the cycle stealing technique, a second aspect of the invention being a control system for implementing said method comprising a controller capable of adjusting the power of the regulator to fine levels. The process and system thus allow high-resolution power regulation and improve the energy efficiency of the Joule heating system. By avoiding the thermal oscillation associated with traditional binary action, a more stable temperature and more efficient use of energy are achieved.

### FIELD OF APPLICATION OF THE INVENTION

The field of application of the present invention falls within the sector of electrical installations, focusing particularly on the area of those intended to generate Joule heat, particularly for heating systems.

### BACKGROUND OF THE INVENTION

Current heating systems operate with a binary on/off (all/nothing) action of the electrical resistors, even when they use PID (Proportional-Integral-Derivative) controllers for thermostatic regulation. This binary operation causes significant thermal oscillations, negatively affecting temperature stability and energy efficiency.

The objective of the present invention is the development of an improved process that avoids said oscillations by the gradual application of power to the resistive load, avoiding the use of a binary action and, therefore, the thermal oscillation generated by said action.

An attempt has been made to solve the above technical problem by regulating the current by means of the cycle stealing technique or by cycle-cutting, but always within the same period. However, the cycle stealing or cycle limiting technique within the same period generates high harmonics (for example, the resulting current signal exceeds the levels established by the EN61000-3-2 standard) so it has always been rejected or limited to low powers.

As a reference to the current state of the art, it should be noted that, as the closest documents related to the object of the invention, the following can be cited: patent US6849834B2 and patent EP0188886B1.

US6849834B discloses a power controller for an AC load comprising: a user interface adapted to interact with a user to produce at least one user interface signal; and a control module adapted to electrically couple a line voltage supply, electrically couple the AC load, and provide electrical power to the AC load as a function of the at least one user interface signal by implementing a low-flicker, cycle-skipping control algorithm, the control algorithm comprising a plurality of cycle patterns, the cycle patterns comprising a plurality of main power levels.

Patent EP0188886B1, discloses a power control device for controlling the output power of a plurality of resistive heating elements comprising a multi-position switch for connecting the heating elements in series and in parallel and means for varying the duty cycle applied to the heating elements in both series and parallel mode.

These background documents do not take into account the harmonics generated by their devices and therefore probably present high harmonics and do not comply with EN61000-3-2.

As is known, the EN 61000-3-2 standard aims to control harmonic emissions generated by electrical and electronic equipment connected to the low voltage distribution network, thus protecting the stability and quality of the electrical network, especially in residential and commercial environments.

The standard applies to electrical and electronic equipment with input current less than or equal to 16 A per phase and establishes different limits depending on the class of the equipment, especially for low-order harmonics (the most problematic, such as the 3rd, 5th, 7th, etc.).

For example, for Class A equipment, which is where heating equipment is normally grouped, the 3rd harmonic current is limited to 2.30 A (in absolute terms or percentage of the fundamental current).

It would therefore be interesting to have a gradual (non-binary) power regulation method for a Joule heater using the cycle stealing technique that does not generate current in high harmonics, i.e. above 1.08 Amps in the 2nd harmonic, 2.30 Amps for the 3rd harmonic, 0.43 Amps for the 4th harmonic, etc., and therefore complies with the EN 61000-3-2 standard.

The conventional power modulation technique usually cuts the sine wave within a single cycle or at most steals half cycles. However, if instead of applying cycle stealing at the level of a single period, the modulation period is enlarged (therefore reducing the frequency of the signal that modulates the carrier, for example, from 50Hz), it is possible to go below the limits established by the standard at the same time as being able to regulate the current and accordingly the heating power of the heating element.

For example, to apply a 50% reduction in the power of a heater powered by a 50Hz carrier current, if instead of applying a square modulating current with a frequency of 25Hz (one complete cycle on and one complete cycle off), the frequency of the square modulating current is reduced to 12.5 Hz (two complete cycles on, two complete cycles off), the result obtained is that the resulting signal does comply with the standard because all the harmonics are below the limit established by same.

However, it does not appear that any of the existing documents, taken separately or in combination, describes a power regulation method or a control system with the technical features of the one claimed here.

### DESCRIPTION OF THE INVENTION

The power regulation method for a Joule heater and a control system to implement said method proposed by the invention are configured as an ideal solution to achieve the aforementioned objective, the characterising details that make it possible and that distinguish them being conveniently described in the final claims that accompany the present description.

Specifically, what the invention proposes, as previously stated, is a method and a control system to regulate the current that feeds a heat-generating resistance which, unlike current systems based on a binary on/off (all/nothing) action, even when using PID controllers for thermostatic regulation, which causes significant thermal oscillations, negatively affecting temperature stability and energy efficiency, is based on the application of the cycle stealing technique and a control system that proposes a mechanism for the gradual application of power to the resistive load, or fine regulation, avoiding the use of a binary action and, therefore, the thermal oscillation generated by said action.

Thus, instead of using an on-off system, the system of the invention adjusts different power levels (for example, with a granularity of 16 or 32 power levels), facilitating the approach and maintenance of the setpoint temperature in a much more stable way than with an on-off actuator. This regulation system (fine regulation) is intended to avoid saw teeth in the temperature curve, thus increasing the efficiency of the system and reducing thermal ripple.

In short, the power regulation method for a Joule heating element, in particular for a heating system that includes a resistive load, comprises the application of the cycle stealing technique, to adjust the power supplied to the load in multiple levels, in bands of more than one period or cycle, instead of applying it within a band of a single period or cycle.

Applying the cycle stealing technique in bands of more than one period or cycles, and therefore enlarging the modulation period, allows the maximum harmonic level to be reduced, placing it below, for example, the limits established by the EN61000-3-2 standard.

Bands of more than one cycle should be understood as those bands that comprise the passage of current for more than one cycle and the non-passage of current for more than one cycle. For example, 1 and a half cycles on and 1 and a half cycles off, or 2 cycles on and 4 cycles off, or 4 cycles on and 2 cycles off.

On the contrary, a single period or cycle band should be understood as those bands that comprise the passage of current for one cycle or less or the non-passage of current for one cycle or less. For example, 1 cycle on and 3 cycles off, or 3 cycles on and 1 cycle off.

This technique also allows for higher resolution regulation and improved thermal stability compared to the binary on/off (all/nothing) regulation technique of electrical resistors, even when using PID (Proportional-Integral-Derivative) controllers for thermostatic regulation.

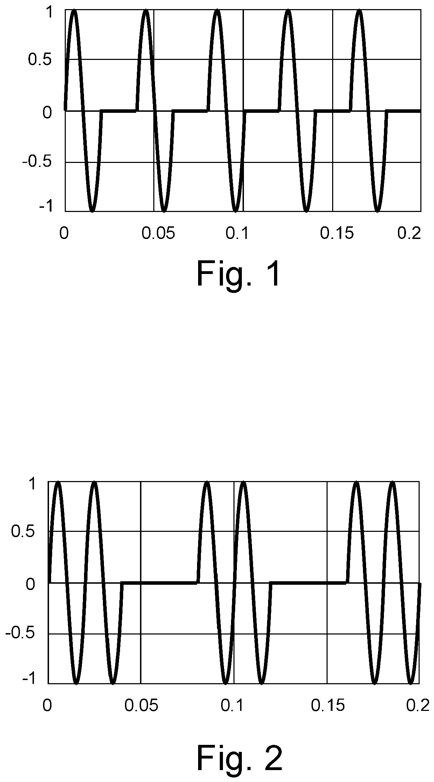

For example, to apply a 50% power reduction, instead of applying the cycle stealing technique and passing the current for one cycle on and one cycle off (25Hz), as shown in the diagram in Figure 1, the method of the invention proposes, for example, reducing the frequency of the square modulator to 12.5 Hz, i.e. two cycles on, two cycles off, as shown in the diagram in Figure 2. The 25Hz solution generates harmonics that are too high to comply with current regulations, whereas the 12.5Hz solution generates harmonics that are low enough to comply with current regulations.

Figures 1 and 2 show the relationship between the frequency spectrum of the 50Hz signal modulated by a 25Hz square wave, and the spectrum of the 50Hz signal modulated by a 12.5Hz square wave. It can be seen that the group of generated harmonics is compressed, remaining below the limits.

The method of the invention contemplates, to apply a 50% reduction in power, any other combination of cycle stealing, which involves the passage of current for more than one cycle and the non-passage of current for more than one cycle, for example 3 cycles on, 3 cycles off.

It is preferable to apply power reduction using the cycle stealing technique with the aim of reducing the power of the Joule heater by applying a modulating current with the highest possible frequency. For example, if the frequency of the current supplying the heater is 50Hz, to achieve 50% power regulation, it is preferable to apply a square modulating current with a frequency of 12.5Hz than a lower frequency, such as 6.25Hz, since the shorter the modulation period, the better dynamic behaviour the system will have and the lower the thermal micro-oscillations to which the resistive load will be subjected will be, as long as the emission levels of the previously indicated harmonic standard are complied with.

The same calculation can also be applied for power reduction of other levels as shown in the following table:

| Level | Does not comply with the standard | Complies with the standard |
|---|---|---|
| 25% | 1 cycle on and 3 cycles off | 2 cycles on and 6 cycles off |
| 33% | 1 cycle on and 2 cycles off | 2 cycles on and 4 cycles off |
| 50% | 1 cycle on and 1 cycle off | 2 cycles on and 2 cycles off |
| 66% | 2 cycles on and 1 cycle off | 4 cycles on and 2 cycles off |
| 75% | 3 cycles on and 1 cycle off | 6 cycles on and 2 cycles off |

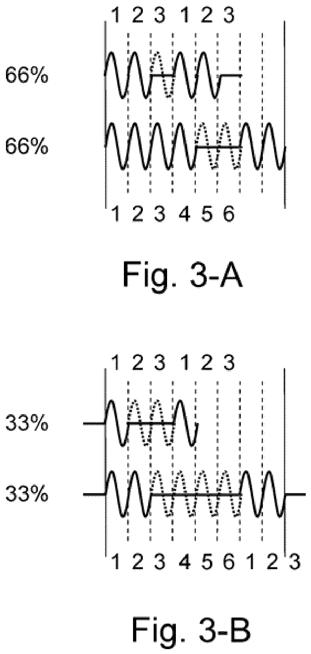

Figures 3-A and 3-B also show diagrams with examples of power reduction using the cycle stealing technique, according to the method of the invention, specifically by 66% and 33% respectively.

In one embodiment of the invention, the power regulation method for a heating element comprises the passage of current for more than one complete cycle and the passage of current is prevented for more than one complete cycle. The passage or impediment of passage of current during incomplete cycles generates, on certain occasions, harmonics that are too high, preventing compliance with current regulations.

In another embodiment of the invention, the power regulation method for a heating element comprises the passage of current for two or more cycles and the passage of current is prevented for two or more cycles.

Furthermore, in order to implement the described cycle stealing method in an electric heating system, the control system object of the invention comprises the use of a digital controller that adjusts the power supplied to the resistive load by means of a regulator in fine steps, instead of simply turning it on or off completely. This controller can be based on a microprocessor that, by means of a temperature sensor, monitors the ambient temperature and adjusts the regulator's output power based on the detected temperature variations, using advanced control algorithms.

There are several advantages of the method and system of the invention based on the aforementioned cycle stealing and fine regulation system, such as:
- Reduced thermal oscillation:
   In an all/nothing control system, every time the temperature exceeds the setpoint and continues heating until reaching the hysteresis level, the room overheats, causing an excess flow of energy to the outside.
- Improved energy efficiency:
   The higher temperature difference between the room overheated by the all/nothing controller effect and the outside causes a net energy loss that is proportional to the amplitude of the oscillation.
   By maintaining a more stable temperature with the cycle stealing system, energy loss is reduced and system efficiency is increased, since the system is not constantly exceeding the setpoint temperature unnecessarily.
- Applicability to Joule elements:
   The process is applicable to any system with an electrical element that operates by the Joule effect. This includes, but is not limited to, electric radiators, water heaters, electric stoves, and other heating devices that use electrical resistance to generate heat.
- Optimised heating resistors:
   By allowing smooth and continuous adjustment of the power supplied to the resistive load, the present invention allows a smaller variety of heating resistors to be used. By means of the present invention it is possible to limit the maximum power of a heating resistor, allowing a thermodynamic behaviour similar to that of a heating resistor of lower maximum power to be obtained.
   Furthermore, the ability to dynamically adjust the power reduces thermal oscillations of the assembly, contributing to the longevity and stability of heating resistors, since excessive thermal stress that could compromise their integrity in the long term is avoided.

In this last aspect, it is important to emphasise that the fact that the radiator is able to modulate the power of the heating load has many implications:

### - Durability of mechanical elements

Radiator elements are assembled together by pressure (not welded). This means that the radiator's tightness is achieved exclusively by contact pressure on the threads of the bushings.

When the elements in contact are heated and cooled, they expand and contract accordingly, and obviously, due to their intrinsic manufacturing and assembly differences, they do not do so exactly the same way, creating mechanical tensions between them.

These temperature differences are obviously much more noticeable when the power control system is based on an "all-nothing" rather than proportional basis.

The mechanical stresses generated when there are considerable and continuous thermal oscillations between elements assembled by pressure (by interference fit of the threads of the bushings) cause these contact points to acquire slack and end up loosening, which can even cause leaks of the liquid inside the radiator.

### - Acoustic comfort

Radiators that have significant thermal variations make noises when they expand and contract.

These noises are linked to the construction of the radiator itself and its fastening mechanisms, since as they are assembled by pressure (and not welded), when the elements expand unevenly, stresses occur between them, as explained in the previous paragraph.

Although the elements expand differently due to their constructive and positional variations, the elements remain in the same position for a few seconds since this stress is not strong enough to overcome the static friction force necessary for them to move relative to each other.

When the power modulation has a regulation cycle that is shorter than the time required to achieve the sliding between the two surfaces that are touching, then said sliding never occurs, and in conditions of thermal equilibrium of the heated room the characteristic "clack-clack-clack" of radiators when they expand and contract is no longer heard.

### - Better performance of the home's electrical network

Thermal-magnetic switches and digital electricity consumption metres that are usually found in homes have reaction curves that activate protections based on the percentage of excess power and the duration of said excess. These curves are called trip curves.

In the event that a home has one, two or more radiators activated simultaneously with an all-nothing control, a condition of simultaneity occurs in which the total current consumed by the system may exceed the contracted power or the power supported by the installation itself.

Conventional all-nothing controllers from all current manufacturers operate in the minute range, while the present modulation system is capable of working with cycle stealing periods below 1 second.

This allows the thermal-magnetic switch or smart metre to operate properly even when its peak current exceeds the nominal power of the installation by several times, since the protection devices provide several seconds of margin without tripping in transient peak consumption conditions.

In conclusion, where other radiators would trip the protections, those equipped with the control system of the invention, based on power modulation, will be able to work perfectly.

### DESCRIPTION OF THE DRAWINGS

To complement the description provided herein, and for the purpose of helping to make the features of the invention more readily understandable, said description is accompanied by a sheet of drawings constituting an integral part of the same, which by way of illustration and not limitation represents the following:
Figure 1 shows a diagram of the modulated sinusoidal signal to achieve 50% power regulation by means of the cycle stealing technique according to the prior art, that is, with one cycle on and one cycle off. This modulated sinusoidal signal generates harmonics that are too high, preventing compliance with current regulations.
Figure 2 shows a diagram of the modulated sinusoidal signal to achieve 50% power regulation by means of the cycle stealing technique according to the method object of the invention, that is, with two cycles on, two cycles off. This modulated sinusoidal signal generates harmonics that are sufficiently low to comply with current regulations;
Figures 3-A and 3-B show respective diagrams with various examples of modulation of the sinusoidal signal to achieve power regulation of 66% and 33%, respectively, by means of the cycle stealing technique, specifically, showing in each of them two types of signal, an upper one applying the cycle stealing technique according to the prior art and a lower one applying the cycle stealing technique according to the method object of the invention.

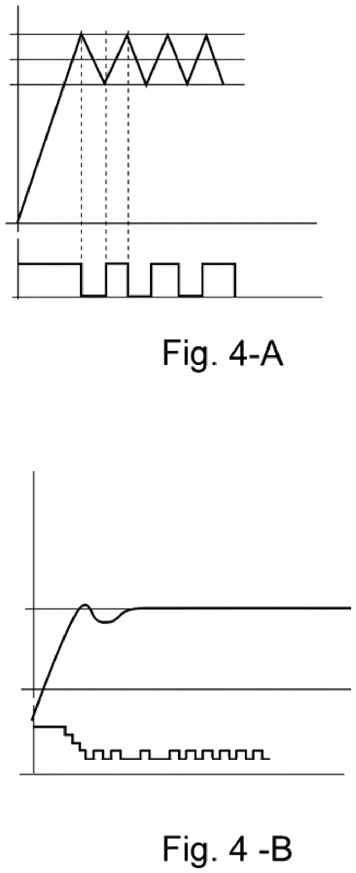

Figures 4-A and 4-B show respective diagrams of an all/nothing system according to the current technique and a fine regulation system by cycle stealing according to the invention, showing the differences between both diagrams of the applied power (lower graph) depending on the temperature detected by the sensor (upper graph);

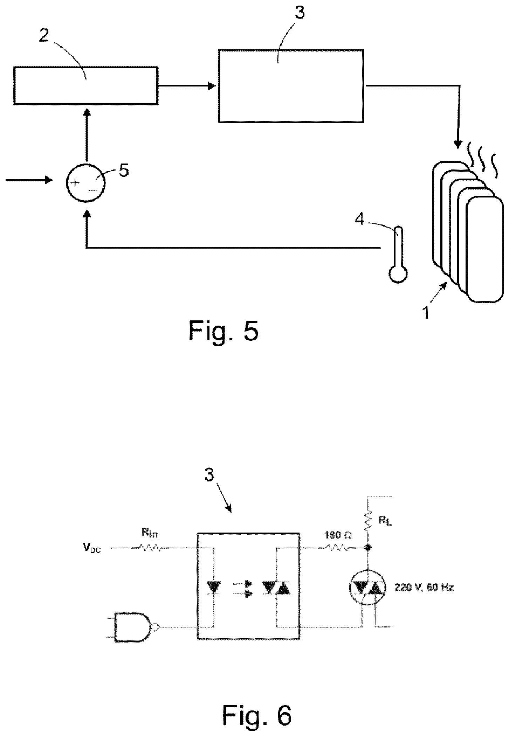

Figure 5 shows a block diagram representation of an example of the control system of the invention for implementing the power regulation method; and
Figure umber 6 shows an electrical diagram of the power regulator comprising the control system of the invention.

### PREFERRED EMBODIMENT OF THE INVENTION

In view of the aforementioned figures, and in accordance with the adopted numbering, one may observe therein a non-limiting exemplary embodiment of the control system for implementing the regulation method of the invention, comprising that which is described in detail below.

Thus, as seen in said figures, particularly in Figure 5, the control system for implementing the power regulation method for a heating element (1) according to the invention comprises a controller (2), preferably a digital controller, connected to a power regulator (3) acting on the heating element (1), such that said controller (2) adjusts the power supplied by the regulator (3) to the resistive load of the heating element (1) by the cycle stealing technique in fine steps, instead of simply turning it on or off.

Preferably, said controller (2) comprises a microprocessor which, by means of a temperature sensor (4) connected to same and installed next to the heating element (1), monitors the ambient temperature and adjusts the output power of the regulator (3) based on the temperature variations detected, using advanced control algorithms.

Preferably, the system comprises a thermostat (5) or other means for entering the temperature setpoint at which the controller (2) must act.

Finally, preferably, the power regulator (3), the electrical diagram of which is shown in Figure 6, which includes an optotriac device or optocoupler with triac, to isolate the power circuit from the control systems.

In Figure 4-A, the upper graph shows how the temperature fluctuates and the lower graph shows the power delivered by the heater. While the temperature is lower than the set point, the power delivered is maximum (ON). When an upper temperature limit is exceeded, the power is turned OFF and remains OFF until it drops below a lower temperature limit, at which point full power is turned ON again.

In Figure 4-B, the upper graph shows how the temperature fluctuates and the lower graph shows how the power is delivered by the heater (cycle stealing technique object of the invention). The power is regulated in discrete steps, which are much shorter in time, to reach and maintain a setpoint temperature. Preferably, when the set temperature is reached, the applied power is reduced and when the system reaches thermodynamic equilibrium, the temperature regulation will oscillate around the two power stages closest to the thermodynamic equilibrium power.

Having sufficiently described the nature of the present invention, as well as the ways in which it may be implemented, it is not considered necessary to elaborate on the explanation thereof in order for a person skilled in the art to understand the scope of the invention and the advantages derived therefrom.

## Claims

1. A power regulation method for a heating element, in particular for a heating system including a resistive load, **characterised by** comprising the application of the cycle stealing technique in bands of more than one period or cycle, that is, the passage of current is allowed for more than one cycle and the passage of current is prevented for more than one cycle.

2. The power regulation method for a heating element according to claim 1, **characterised in that** it comprises the passage of current for more than one complete cycle and the passage of current is prevented for more than one complete cycle.

3. The power regulation method for a heating element according to any of the preceding claims, **characterised in that** it comprises the passage of current for two or more cycles and the passage of current is prevented for two or more cycles.

4. A control system for implementing a power regulation method for a heating element according to the preceding claims, **characterised in that** it comprises a controller (2) connected to a power regulator (3) acting on the heating element (1), such that said controller (2) adjusts the power supplied by the regulator (3) to the resistive load of the heating element (1) by the cycle stealing technique in fine steps, instead of simply turning it on or off.

5. The control system according to claim 4, **characterised in that** the controller (2) is a digital controller.

6. The control system according to claim 5, **characterised in that** the controller (2) comprises a microprocessor which, by means of a temperature sensor (4) connected to same and installed next to the heating element (1), monitors the ambient temperature and adjusts the output power of the regulator (3) based on the temperature variations detected, using advanced control algorithms.

7. The control system according to claim 6, **characterised in that** it comprises a thermostat (5) or other means for entering the temperature setpoint at which the controller (2) must act.
